(19) Europäisches Patentamt
European Patent Office
Office européen des brevets

(11) **EP 2 902 759 A1**

(12) **EUROPÄISCHE PATENTANMELDUNG**

(43) Veröffentlichungstag:
**05.08.2015 Patentblatt 2015/32**

(51) Int Cl.:
*G01J 5/04* (2006.01)  *G01J 5/20* (2006.01)

(21) Anmeldenummer: **14195330.7**

(22) Anmeldetag: **28.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.01.2014 DE 102014201620**

(71) Anmelder: **ROBERT BOSCH GMBH**
**70442 Stuttgart (DE)**

(72) Erfinder: **Utermoehlen, Fabian**
**70197 Stuttgart (DE)**

(54) **Sensorvorrichtung, Herstellungsverfahren für eine Sensorvorrichtung und Verfahren zum Ermitteln einer Information bezüglich einer Temperatur und/oder bezüglich einer Strahlung**

(57) Die Erfindung betrifft eine Sensorvorrichtung mit einem Substrat (10) mit mindestens einer darin ausgebildeten Kaverne (12), und mindestens einer temperatursensitiven Sensoreinrichtung (14), welche mittels mindestens einer die mindestens eine zugeordnete Kaverne (12) zumindest teilweise überspannenden Aufhängungsstruktur (16) an und/oder über der mindestens einen zugeordneten Kaverne (12) aufgehängt ist, wobei die mindestens eine temperatursensitive Sensoreinrichtung (14) derart ausgebildet ist, dass mindestens eine elektrische Eigenschaft der jeweiligen temperatursensitiven Sensoreinrichtung (14) bei einer Variierung einer an und/oder in der jeweiligen temperatursensitiven Sensoreinrichtung (14) und/oder der mindestens einen zugeordneten Kaverne (12) vorliegenden Temperatur variiert, wodurch mindestens ein von der jeweiligen temperatursensitiven Sensoreinrichtung (14) an eine sensorvorrichtungseigene oder externe Betreiberelektronik (18) bereitstellbares Stromsignal bei der Variierung der Temperatur variiert, wobei die mindestens eine temperatursensitive Sensoreinrichtung (14) jeweils mindestens einen Bipolartransistor (20) umfasst. Ebenso betrifft die Erfindung ein Herstellungsverfahren für eine Sensorvorrichtung und ein Verfahren zum Ermitteln einer Information bezüglich einer Temperatur und/oder bezüglich einer Strahlung.

**Fig. 1a**

**Beschreibung**

Die Erfindung betrifft eine Sensorvorrichtung und ein Herstellungsverfahren für eine Sensorvorrichtung. Des Weiteren betrifft die Erfindung ein Verfahren zum Ermitteln einer Information bezüglich einer Temperatur und/oder bezüglich einer Strahlung.

Stand der Technik

In der DE 10 2006 028 435 A1 sind ein Sensor und ein Verfahren zu seiner Herstellung beschrieben. Der Sensor umfasst ein Substrat mit mindestens einer darin ausgebildeten Kaverne und mindestens einem temperatursensitiven Pixel, welches mittels elastischer Aufhängefedern über der mindestens einen zugeordneten Kaverne aufgehängt ist. Das mindestens eine temperatursensitive Pixel ist derart ausgebildet, dass mindestens eine seiner elektrischen Eigenschaften bei einer Variierung einer daran und/oder in der mindestens einen zugeordneten Kaverne vorliegenden Temperatur variiert. Auf diese Weise ist ein von dem mindestens einen temperatursensitiven Pixel an eine Betreiberelektronik bereitstellbares Stromsignal variierbar. Das mindestens eine temperatursensitive Pixel soll zur direkten Temperatursensierung verwendbar sein. Ergänzend kann ein Absorptionsmaterial zur Absorption von Infrarotstrahlung auf das mindestens eine temperatursensitive Pixel aufgebracht sein, wodurch das mindestens eine temperatursensitive Pixel auch zur (indirekten) Sensierung von Infrarotstrahlung ausbildbar sein soll.

Offenbarung der Erfindung

Die Erfindung schafft eine Sensorvorrichtung mit den Merkmalen des Anspruchs 1, ein Herstellungsverfahren für eine Sensorvorrichtung mit den Merkmalen des Anspruchs 11 und ein Verfahren zum Ermitteln einer Information bezüglich einer Temperatur und/oder bezüglich einer Strahlung mit den Merkmalen des Anspruchs 12.

Vorteile der Erfindung

Die Erfindung stellt die Vorteile eines Bipolartransistors gegenüber herkömmlichen temperatursensitiven Sensoreinrichtungen, wie beispielsweise temperatursensitiven Diodenpixeln, für eine direkte Temperaturmessung mittels des mindestens einen Bipolartransistors und eine indirekte Strahlungsmessung mittels einer zusätzlichen Verwendung einer strahlungsabsorbierenden Schicht sicher. Insbesondere kann eine Sensorempfindlichkeit/Nachweisempfindlichkeit mittels der vorliegenden Erfindung optimiert werden. Während bei herkömmlichen temperatursensitiven Pixeln mit Dioden deren Sensitivität kaum variierbar ist, kann die Sensitivität des mindestens einen Bipolartransistors innerhalb eines vergleichsweise großen Wertebereichs auf einen bevorzugten Wert eingestellt werden. Somit entfällt bei einer Nutzung der vorliegenden Erfindung die herkömmliche Notwendigkeit, für ein Einstellen der Sensitivität eines temperatursensitiven Sensorelements mehrere Dioden in einer Serienschaltung zu kombinieren, um deren Temperatursensitivität additiv zu erhöhen.

Das mittels der vorliegenden Erfindung realisierbare Entfallen einer Verwendung einer Serienschaltung aus mehreren Dioden gewährleistet auch Möglichkeiten zum Minimieren der erfindungsgemäßen Sensorvorrichtung. Da die mindestens eine temperatursensitive Sensoreinrichtung mit dem mindestens einen Bipolartransistor vergleichsweise platzsparend ausbildbar ist, ist eine Reduzierung der Größe der erfindungsgemäßen Sensorvorrichtung leicht machbar. Außerdem benötigt die in ihrer Größe reduzierte Sensorvorrichtung weniger Materialien und ist damit kostengünstiger herstellbar. Des Weiteren erleichtert die kleinere und leichtere Ausbildbarkeit der erfindungsgemäßen Sensorvorrichtung deren Positionierung an einer gewünschten Messposition. Es wird auch darauf hingewiesen, dass aufgrund der vergleichsweise platzsparenden Ausbildbarkeit der mindestens einen temperatursensitiven Sensoreinrichtung mit dem mindestens einen Bipolartransistor eine kleinere und kostengünstigere Optik für die erfindungsgemäße Sensorvorrichtung verwendbar ist.

In einer vorteilhaften Ausführungsform umfasst die Sensorvorrichtung eine Betreiberelektronik, welche dazu ausgelegt ist, unter Berücksichtigung des mindestens einen von der mindestens einen temperatursensitiven Sensoreinrichtung bereitgestellten Stromsignals eine Information bezüglich einer Temperatur und/oder bezüglich einer Strahlung festzulegen und auszugeben. Die Sensorvorrichtung ist somit wahlweise zum direkten Messen einer Temperatur/Temperaturverteilung oder zum (indirekten) Ermitteln einer Strahlungsdichte/Strahlungsdichteverteilung (unter einer Verwendung mindestens einer auf/in der temperatursensitiven Sensoreinrichtung abgeschiedenen strahlungsabsorbierenden Schicht) ausbildbar. Die Sensorvorrichtung kann somit für eine Vielzahl von Verwendungszwecken eingesetzt werden.

Insbesondere kann die Betreiberelektronik dazu ausgelegt sein, die Information bezüglich der Temperatur und/oder bezüglich der Strahlung unter Berücksichtigung mindestens eines Kollektorstroms des mindestens einen Bipolartransistors der mindestens einen temperatursensitiven Sensoreinrichtung als das mindestens eine Stromsignal festzulegen und auszugeben. Die Sensorvorrichtung kann somit den Vorteil nutzen, dass der mindestens eine Kollektorstrom des mindestens einen Bipolartransistors in vielen Fällen stark temperaturabhängig ist. Dies erleichtert eine Auswertung des mindestens einen Kollektorstroms des mindestens einen Bipolartransistors.

Vorzugsweise ist die Betreiberelektronik zusätzlich dazu ausgelegt, an den mindestens einen Bipolartransistor der mindestens einen temperatursensitiven Sensoreinrichtung eine Basis-Emitter-Spannung größer Null und kleiner als die für den mindestens einen jeweiligen Bipolartransistor vorgegebene Schwellspannung anzulegen. Somit kann der Vorteil genutzt werden, dass der mindestens eine Kollektorstrom des mindestens einen Bipolartransistors für Basis-Emitter-Spannungen größer Null und kleiner als die für den mindestens einen jeweiligen Bipolartransistor vorgegebene Schwellspannung stark temperaturabhängig ist. Eine Temperatursensitivität kann häufig mit über 10 %/K in Größenordnungen höher als bei herkömmlichen temperatursensitiven Bauelementen liegen. Außerdem hängt die Temperatursensitivität des Kollektorstroms in diesem Fall nicht von der gewählten/fest vorgegebenen Kollektor-Emitter-Spannung an dem mindestens einen Bipolartransistor ab.

In einer besonders vorteilhaften Ausführungsform ist die Betreiberelektronik zusätzlich dazu ausgelegt, an den mindestens einen Bipolartransistor der mindestens einen temperatursensitiven Sensoreinrichtung unterschiedliche Spannungswerte größer Null als Basis-Emitter-Spannung anzulegen, und unter Berücksichtigung des als Basis-Emitter-Spannung angelegten Spannungswerts eine Auswerterelation aus einer Wertemenge mit mindestens zwei Auswerterelationen auszuwählen, und die Information unter Berücksichtigung des mindestens einen Kollektorstroms und der ausgewählten Auswerterelation festzulegen. Dabei nutzt die Sensorvorrichtung den Vorteil, dass die Temperatursensitivität des mindestens einen Kollektorstroms mittels der angelegten Basis-Emitter-Spannung variierbar ist. Insbesondere kann auf diese Weise die Temperatursensitivität so angepasst werden, dass immer ein ausreichend hoher Kollektorstrom, welcher sich leicht und verlässlich auswerten lässt, zur Verfügung steht.

Vorzugsweise ist der mindestens eine Bipolartransistor der mindestens einen temperatursensitiven Sensoreinrichtung ein Heterojunctionbipolartransistor (Bipolartransistor mit Heteroübergang, HBT oder HJBT). Jeder Heterojunctionbipolartransistor zeigt die gewünschte Temperaturabhängigkeit seines Kollektorstroms in Abhängigkeit von der anliegenden Basis-Emitter-Spannung. Die jeweilige Temperatursensitivität der mindestens einen temperatursensitiven Sensoreinrichtung kann damit elektrisch während ihres Betriebs nachgeregelt werden. Ein Übersteuern der mindestens einen temperatursensitiven Sensoreinrichtung bei großen Signalen ist deshalb ausgeschlossen. Weiterhin kann die Empfindlichkeit der mindestens einen temperatursensitiven Sensoreinrichtung je nach spezifischer Anwendung optimiert eingestellt werden. Damit sind die Vorteile einer frei einstellbaren Temperatursensitivität ohne die Verwendung einer Serienschaltung realisierbar. Die Sensorvorrichtung mit dem mindestens einen Heterojunctionbipolartransistor hat somit ein erhebliches Miniaturisierungspotential. Ein zusätzlicher Vorteil der mit dem mindestens einen Heterojunctionbipolartransistor ausgestatteten Sensorvorrichtung ist, dass der Kollektorstrom gegenüber einem Auswertesignal eines Standard-Bipolartransistors bei gleichem Platzbedarf erhöht ist, so dass eine einfachere und weniger anfällige Architektur/Schaltungstechnik für die Betreiberelektronik verwendbar ist. Dies reduziert auch das Rauschen der Auswerteelektronik und verbessert deren Signal-Lärm-Verhältnis (Signal-Noise-Relation, SNR).

Beispielsweise kann der mindestens eine Bipolartransistor der mindestens einen temperatursensitiven Sensoreinrichtung ein Silizium-Siliziumgermanium-Bipolartransistor sein. Somit können das Abscheiden und Strukturieren des mindestens einen Bipolartransistors bereits entwickelte Standardverfahren eingesetzt werden. Die Sensorvorrichtung ist damit vergleichsweise einfach und kostengünstig herstellbar. Ein weiterer Vorteil des mindestens einen Silizium-Siliziumgermanium-Bipolartransistors liegt darin, dass die unterschiedlichen Gitterkonstanten des Siliziumgermaniums ein zusätzliches elektrisches Feld erzeugen, was eine schnellere Reaktion und eine höhere Stromverstärkung bewirkt.

In einer weiteren vorteilhaften Ausführungsform ist der mindestens eine Bipolartransistor der gleichen temperatursensitiven Sensoreinrichtung über ausschließlich zwei Leitungen kontaktierbar. Man kann dies auch damit umschreiben, dass der mindestens eine Bipolartransistor der gleichen Sensoreinrichtung über ausschließlich zwei Leitungen an die sensorvorrichtungseigene oder externe Betreiberelektronik anbindbar/angebunden ist. Obwohl es sich bei einem Bipolartransistor/Heterojunctionbipolartransistor um ein dreipoliges Bauelement handelt, reichen zwei nach außen geführte Leitungen aus, um das Bauelement mit der Betreiberelektronik (z.B. einem ASIC) zu verbinden. Aufgrund der Anbindung des mindestens einen Bipolartransistors der gleichen Sensoreinrichtung an nur die zwei daran mündenden Leitungen ist eine gute thermische Entkopplung von diesem gewährleistet, was eine vorteilhafte Sensor-Performance von diesem ermöglicht.

Insbesondere können auch mindestens zwei Bipolartransistoren der gleichen Sensoreinrichtung über ausschließlich zwei Leitungen gemeinsam kontaktierbar sein. Somit sind die in dem vorausgehenden Absatz beschriebenen Vorteile auch bei einer Sensorvorrichtung gewährleistet, deren mindestens eine temperatursensitive Sensoreinrichtung mindestens zwei Bipolartransistoren aufweist.

Die Sensorvorrichtung kann z.B. ein Temperatursensorbauteil, ein Temperatursensor, ein Strahlungssensorbauteil, ein Strahlungssensor, ein Infrarotsensorbauteil, ein Infrarotsensor und/oder eine Wärmebildkamera sein. Somit können die in den vorausgehenden Absätzen beschriebenen Vorteile für eine Vielzahl von Verwendungen genutzt werden.

Die oben beschriebenen Vorteile sind auch bei einem entsprechenden Herstellungsverfahren für eine Sensorvorrichtung gewährleistet. Das Herstellungsverfahren ist gemäß den oben beschriebenen Ausführungsformen der Sensorvorrichtung weiterbildbar.

Des Weiteren realisiert auch das Ausführen des korrespondierenden Verfahrens zum Ermitteln/Messen einer Information bezüglich einer Temperatur und/oder bezüglich einer Strahlung. Auch das Verfahren ist gemäß den oben beschriebenen Ausführungsformen der Sensorvorrichtung weiterbildbar.

Kurze Beschreibung der Zeichnungen

Weitere Merkmale und Vorteile der vorliegenden Erfindung werden nachfolgend anhand der Figuren erläutert. Es zeigen:

Fig. 1a bis 1f      schematische Darstellungen und Koordinatensysteme zum Erläutern eines Aufbaus und einer Funktionsweise einer ersten Ausführungsform der Sensorvorrichtung;

Fig. 2a und 2b      eine Draufsicht und einen Querschnitt einer zweiten Ausführungsform der Sensorvorrichtung;

Fig. 3a und 3b      eine Draufsicht und einen Querschnitt einer dritten Ausführungsform der Sensorvorrichtung;

Fig. 4      eine schematische Darstellung einer vierten Ausführungsform der Sensorvorrichtung;

Fig. 5      ein Flussdiagramm zum Erläutern einer Ausführungsform des Herstellungsverfahrens für eine Sensorvorrichtung; und

Fig. 6      ein Flussdiagramm zum Erläutern einer Ausführungsform des Verfahrens zum Ermitteln einer Information bezüglich einer Temperatur und/oder bezüglich einer Strahlung.

Ausführungsformen der Erfindung

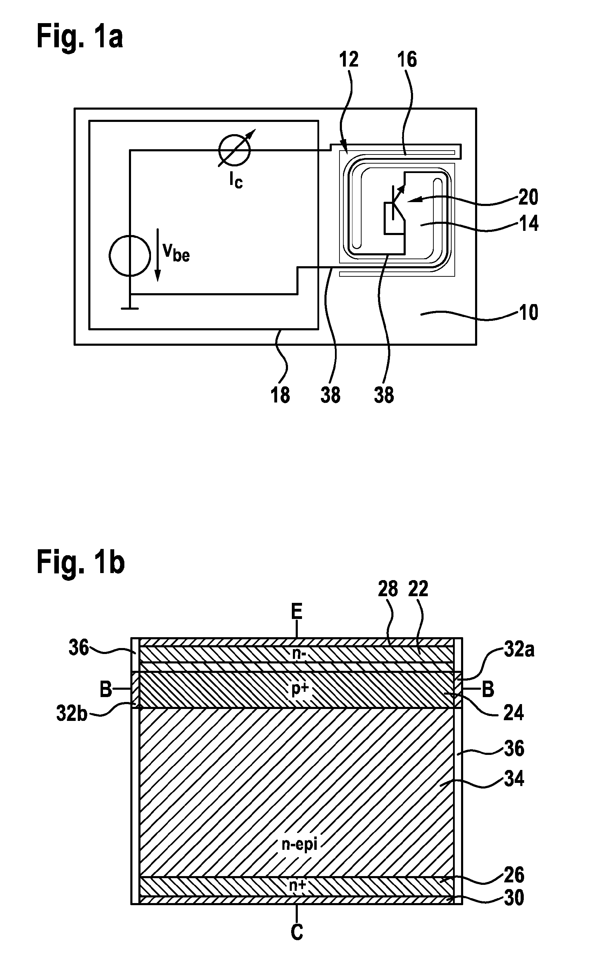

Fig. 1a bis 1f zeigen schematische Darstellungen und Koordinatensysteme zum Erläutern eines Aufbaus und einer Funktionsweise einer ersten Ausführungsform der Sensorvorrichtung.

Die in Fig. 1a schematisch dargestellte Sensorvorrichtung umfasst ein Substrat 10 mit mindestens einer darin ausgebildeten Kaverne 12. Außerdem hat die Sensorvorrichtung mindestens eine temperatursensitive Sensoreinrichtung 14, welche mittels mindestens einer die mindestens eine zugeordnete Kaverne 12 zumindest teilweise überspannenden Aufhängungsstruktur 16 an und/oder über der mindestens einen zugeordneten Kaverne 12 aufgehängt ist. Die mindestens eine Aufhängungsstruktur 16 kann beispielsweise eine elastische Aufhängefeder sein. Es wird jedoch darauf hingewiesen, dass die Ausführbarkeit der Sensorvorrichtung nicht auf eine bestimmte Form der mindestens einen Kaverne 12 oder der mindestens einen Aufhängungsstruktur 16 limitiert ist. Auch für das Substrat 10 kann eine Vielzahl verschiedener Substrate, wie beispielsweise ein kostengünstiges Siliziumsubstrat, eingesetzt werden.

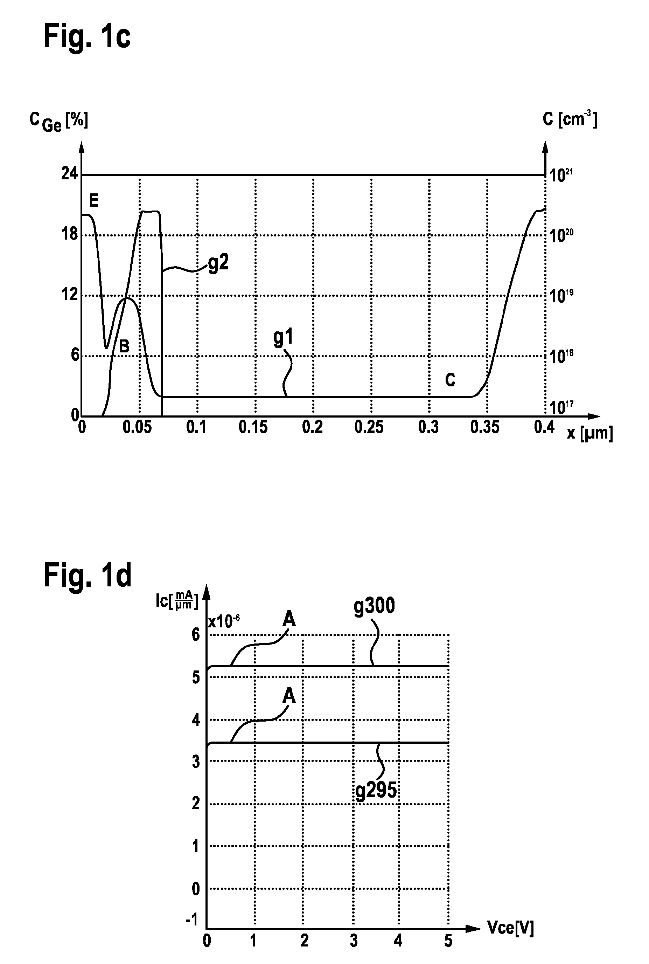

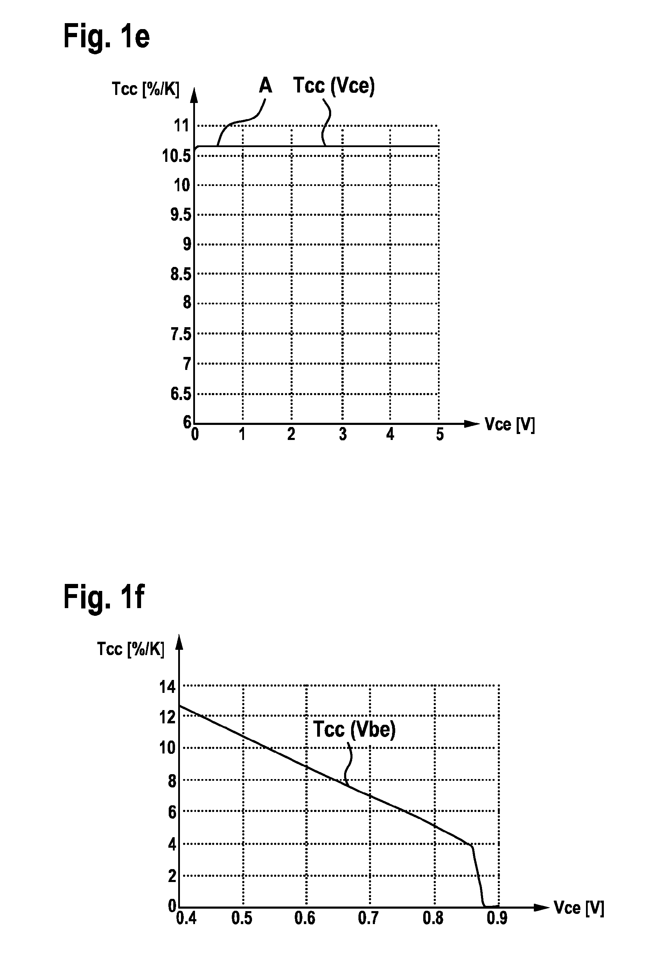

Die mindestens eine temperatursensitive Sensoreinrichtung 14 ist derart ausgebildet, dass mindestens eine elektrische Eigenschaft der jeweiligen temperatursensitiven Sensoreinrichtung 14 bei einer Variierung einer an und/oder in der jeweiligen temperatursensitiven Sensoreinrichtung 14 und/oder der mindestens einen zugeordneten Kaverne 12 vorliegenden Temperatur variiert. Dadurch variiert auch mindestens ein von der jeweiligen temperatursensitiven Sensoreinrichtung 14 an eine sensorvorrichtungseigene oder externe Betreiberelektronik 18 bereitstellbares Stromsignal (bei der Variierung der Temperatur). In der Ausführungsform der Fig. 1 a bis 1f ist die Betreiberelektronik 18 auf dem gleichen Substrat 10 wie die mindestens eine temperatursensitive Sensoreinrichtung 14 ausgebildet. Als Alternative dazu kann die Betreiberelektronik 18 jedoch auch auf einem anderen Träger ausgebildet sein. Die Betreiberelektronik 18 kann beispielsweise ein ASIC (Anwendungsspezifische integrierte Schaltung, Application Specific Integrated Circuit) sein. Anstelle eines ASICs können jedoch auch verschiedene andere kostengünstige Elektroniken für die Betreiberelektronik 18 eingesetzt werden.

Die mindestens eine temperatursensitive Sensoreinrichtung 14 umfasst jeweils mindestens einen Bipolartransistor 20. Speziell ist in der Ausführungsform der Fig. 1 a bis 1f der mindestens eine Bipolartransistor 20 der mindestens temperatursensitiven Sensoreinrichtung 14 ein Heterojunctionbipolartransistor 20 (Bipolartransistor mit HeteroÜbergang, HBT bzw. HJBT, Heterojunction Bipolar Transistor). Die Vorteile einer derartigen Ausbildung der mindestens einen temperatursensitiven Sensoreinrichtung 14 werden unten noch genauer erläutert.

Fig. 1b zeigt einen Querschnitt durch den Bipolartransistor/Heterojunctionbipolartransistor 20 entlang einer Ebene, welche senkrecht zu einer mit dem Bipolartransistor/Heterojunctionbipolartransistor 20 bestückten Oberseite des Substrats 10 ausgerichtet ist. Der Bipolartransistor/Heterojunctionbipolartransistor 20 umfasst mindestens einen (n$^+$-dotierten) Emitterbereich 22, mindestens einen (p$^+$-dotierten) Basisbereich 24 und mindestens einen (n$^+$-dotierten) Kollektorbereich 26. An dem Emitterbereich 22 ist ein Emitterkontakt 28 angebunden. Entsprechend wird der Kollektorbereich 26 von einem Kollektorkontakt 30 kontaktiert. Die beiden an dem Basisbereich 24 ausgebildeten Basiskontakte 32a und 32b liegen vorzugsweise immer auf demselben Potential. Der mindestens eine Kontakt 28, 30, 32a und 32b kann z.B. aus einer (dotierte) Polysilizium- und/oder Metallschicht, insbesondere Titansilizid, gebildet sein.

In der Ausführungsform der Fig. 1a bis 1f ist der mindestens eine Bipolartransistor/Heterojunctionbipolartransistor 20 der mindestens einen temperatursensitiven Sensoreinrichtung 14 ein Silizium-Germanium-Bipolartransistor. Beispielsweise können die Bereiche 22 bis 26 in einer Siliziumschicht/Siliziummembran 34, insbesondere in einer epitaktisch aufgewachsenen Siliziumschicht/Siliziummembran 34, ausgebildet sein. Unter Umständen können noch andere Schichten in den Silizium-Germanium-Bipolartransistor eingebracht sein. Die Bereiche 22 bis 26 können mittels mindestens eines Isolationsbereichs 36, z.B. aus Siliziumdioxid, von benachbarten Halbleiterbereichen elektrisch isoliert sein. Auch andere elektrisch isolierende Materialien können bei der Herstellung des Bipolartransistors/Heterojunctionbipolartransistors 20 eingesetzt werden. Die Ausbildung des mindestens einen Isolationsbereichs 36 ist allerdings optional, da durch den Trenchprozess automatisch eine elektrische Isolation der Bereiche 22 bis 26 zu benachbarten Bauelementen ausbildbar ist.

Fig. 1c gibt mit einem Graphen g1 eine Dotierungskonzentration C (in cm$^{-3}$) des Silizium-Germanium-Bipolartransistor an. Mit einem weiteren Graphen g2 ist eine Germanium-Konzentration $C_{Ge}$ (in %) innerhalb des Silizium-Germanium-Bipolartransistors wiedergegeben. Die Abszisse des Koordinatensystems der Fig. 1c zeigt eine Schichttiefe x (in $\mu$m) in der Siliziumschicht/Siliziummembran 34 (entlang der senkrecht zur Oberseite des Substrats 10 ausgerichteten Ebene) an. Der mindestens eine Bipolartransistor/Heterojunctionbipolartransistor 20 kann z.B. durch das Dotierprofil und die Abmessungen der einzelnen Schichtdicken für eine Transitfrequenz von 120 GHz ausgelegt sein. Es wird allerdings darauf hingewiesen, dass das in Fig. 1c dargestellte Dotierprofil lediglich beispielhaft zu interpretieren ist. Außerdem ist die Ausbildbarkeit des Bipolartransistors/Heterojunctionbipolartransistors 20 nicht auf die angegebene Germanium-Konzentration $C_{Ge}$ oder auf die Verwendung von Silizium oder Germanium limitiert. Stattdessen kann eine Vielzahl von Halbleitermaterialien zum Herstellen des Bipolartransistors/Heterojunctionbipolartransistors 20 verwendet werden.

In der Ausführungsform der Fig. 1a bis 1f ist die Betreiberelektronik 18 dazu ausgelegt, unter Berücksichtigung des mindestens einen von der mindestens einen temperatursensitiven Sensoreinrichtung 14 bereitgestellten Stromsignals eine Information bezüglich einer Temperatur und/oder bezüglich einer Strahlung festzulegen und auszugeben. Die mindestens eine Information kann somit z.B. eine Temperatur, eine Temperaturverteilung, eine Strahlungsdichte und/oder eine Strahlungsdichteverteilung sein. Eine Strahlung kann (indirekt) auch mittels der mindestens einen temperatursensitiven Sensoreinrichtung 14 nachgewiesen/gemessen werden, sofern die Strahlung mittels der mindestens einen temperatursensitiven Sensoreinrichtung 14, bzw. mittels mindestens einer auf und/oder in der temperatursensitiven Sensoreinrichtung 14 abgeschiedenen strahlungsabsorbierenden Schicht absorbierbar ist. Beispielsweise kann zum Absorbieren der Strahlung eine strahlungsabsorbierende Schicht auf einer zu der mindestens einen zugeordneten Kaverne 12 zugewandten Seite der mindestens einen temperatursensitiven Sensoreinrichtung 14 liegen. Es wird aber darauf hingewiesen, dass bei einem Einsetzen der Sensorvorrichtung zum Messen einer Temperatur/Temperaturverteilung keine strahlungsabsorbierende Schicht notwendig ist.

Die Sensorvorrichtung der Fig. 1a bis 1e eignet sich besonders gut zum Nachweisen/Ermitteln einer Infrarotstrahlung. Gemäß des Plankschen Gesetzes emittiert jedes Objekt mit einer Temperatur um die Raumtemperatur (300 K) elektromagnetische Strahlung mit einem Schwerpunkt im Ferninfrarotbereich, d.h. in einem Wellenlängenbereich zwischen 8 $\mu$m bis 14 $\mu$m. In diesem Bereich ist die Absorption in der Atmosphäre nahezu vernachlässigbar, so dass die Sensorvorrichtung die Infrarotstrahlung/Wärmestrahlung selbst über eine große Entfernung zum jeweiligen Objekt detektieren kann. Die Infrarotstrahlung/Wärmestrahlung kann z.B. mittels einer Siliziumdioxidschicht auf/in der mindestens einen temperatursensitiven Sensoreinrichtung 14 absorbiert werden, wodurch sich eine Temperatur an/in der jeweiligen temperatursensitiven Sensoreinrichtung 14 und/oder der mindestens einen benachbarten Kaverne 12 erhöht. Mittels eines Untersuchens der Temperatur kann somit ein Rückschluss auf die Infrarotstrahlungsdichte, bzw. eine Temperatur des jeweiligen Objekts, gezogen werden. Das bolometrische Prinzip (d.h. eine Absorption von Photonen und einer Detektion der dabei entstehenden Wärme) kann somit auch für die Sensorvorrichtung genutzt werden. Die Sensorvorrichtung ist somit auch als Bolometer, speziell als Mikrobolometer, einsetzbar, wobei die Sensorvorrichtung ungekühlt betreibbar ist.

In der Ausführungsform der Fig. 1a bis 1f ist die Betreiberelektronik 18 dazu ausgelegt, die Information bezüglich der Temperatur und/oder bezüglich der Strahlung unter Berücksichtigung mindestens eines Kollektorstroms Ic des mindestens einen Bipolartransistors/Heterojunctionbipolartransistors 20 der mindestens einen temperatursensitiven Sensoreinrichtung 14 als das mindestens eine Stromsignal festzulegen und auszugeben. Eine Temperaturabhängigkeit des Kollektorstroms Ic lässt sich aus Gleichung (Gl. 1) (Kollektorstromgleichung) ableiten:

$$\text{(Gl. 1)} \qquad I_c(V_{be}, T) = \left(1 + \frac{V_{ce}}{V_a}\right) * I_s(T) * e^{\frac{V_{be}}{V_t}},$$

wobei Is ein Sättigungsstrom, Vbe eine Basis-Emitter-Spannung, Vce eine Kollektor-Emitter-Spannung, Va eine Early-Spannung und Vt eine Temperaturspannung sind. Die Temperaturspannung Vt ergibt sich nach Gleichung (Gl. 2) mit:

$$\text{(Gl. 2)} \qquad V_t = \frac{k * T}{q},$$

Hierbei sind k die Boltzmann-Konstante, T eine absolute Temperatur und q die Elementarladung.

In Standardbetriebszuständen für Hochfrequenzschaltungen ist die Basis-Emitter-Spannung Vbe immer größer als eine gewisse Schwellspannung. Damit überwiegt in einer derartigen Situation ein Temperatureinfluss der Temperaturspannung Vt und der Sättigungsstrom Is kann als nahezu konstant angenommen werden.

Die Betreiberelektronik 18 ist vorzugsweise dazu ausgelegt, an den mindestens einen Bipolartransistor/Heterojunctionbipolartransistor 20 der mindestens einen temperatursensitiven Sensoreinrichtung 14 eine Basis-Emitter-Spannung Vbe größer Null und kleiner als eine für den mindestens einen jeweiligen Bipolartransistor/Heterojunctionbipolartransistor 20 vorgegebene Schwellspannung anzulegen. Sofern die Basis-Emitter-Spannung Vbe größer Null und kleiner als die Schwellspannung ist, überwiegt gemäß Gleichung (Gl. 1) der Temperaturfluss des Sättigungsstromes Is. Dies ergibt einen exponentiellen Einfluss des temperaturabhängigen Bandabstandes, welcher ursächlich für einen stark temperaturabhängigen Kollektorstrom Ic bei einer Basis-Emitter-Spannung Vbe größer Null und kleiner als die vorgegebene Schwellspannung ist. Die Betreiberelektronik 18 kann somit die starke Temperaturabhängigkeit des Kollektorstroms Ic bei einer Basis-Emitter-Spannung Vbe größer Null und kleiner als die vorgegebene Schwellspannung für ein verlässliches Festlegen der Information nutzen. Insbesondere kann die Temperaturabhängigkeit/ein Temperaturkoeffizient des Kollektorstroms Ic für Basis-Emitter-Spannungen Vbe größer Null und kleiner als die vorgegebene Schwellspannung größer als 10 %/K sein.

Fig. 1d zeigt ein Koordinatensystem zum Erläutern einer Abhängigkeit des Kollektorstroms Ic von einer Kollektor-Emitter-Spannung Vce. Mittels der Abszisse des Koordinatensystems der Fig. 1d ist die Kollektor-Emitter-Spannung Vce (in V) wiedergegeben. Die Ordinate des Koordinatensystems der Fig. 1d zeigt die zugehörigen Werte für den Kollektorstrom Ic (in mA/μm) an.

Die in Fig. 1d für den Kollektorstrom Ic eingetragenen Werte der Graphen g295 und g300 sind bei einer Basis-Emitter-Spannung Vbe von 0,5 V bestimmt. (Die Schwellspannung des jeweiligen Bipolartransistors/Heterojunctionbipolartransistors 20 liegt zwischen 0,7 V bis 0,8 V.) Der Graph g295 gibt Werte für eine Temperatur von 295 K an. Mittels des Graphen g300 sind Werte bei einer Temperatur von 300 K dargestellt.

Wie man anhand der Graphen g295 und g300 erkennt, hängt der Kollektorstrom Ic ab eines Überschreitens einer Schwelle der Kollektor-Emitter-Spannung bei ca. 0,2 Volt nicht mehr von der Kollektor-Emitter-Spannung Vce ab. Dies erkennt man auch an der in Fig. 1e dargestellten als Temperatursensitivität Tcc(Vce) des Kollektorstroms Ic in Abhängigkeit von der Kollektor-Emitter-Spannung Vce bei einer Basis-Emitter-Spannung Vbe von 0,5 V. (Die Abszisse des Koordinatensystems der Fig. 1e ist die Kollektor-Emitter-Spannung Vce (in V), während die Ordinate des Koordinatensystems der Fig. 1e die spannungsabhängige Temperatursensitivität Tcc (in %/K) angibt.) Man erkennt, dass die Temperatursensitivität Tcc des Kollektorstroms Ic (nahezu) konstant bei über 10,5 %/K liegt. Damit sind bei dem in Fig. 1d und Fig. 1e eingezeichneten Arbeitspunkt A bei einer Basis-Emitter-Spannung Vbe und einer Kollektor-Emitter-Spannung Vce von jeweils 0,5 V zwei an den entsprechenden Bipolartransistor/Heterojunctionbipolartransistor 20 angelegte Kontakte ausreichend, um den Temperatureffekt mittels der Betreibereinrichtung 18 auszuwerten.

Gemäß Gleichung (Gl. 1) sinkt für höhere Basis-Emitter-Spannungen Vbe der starke Temperatureinfluss des Sättigungsstromes Is. Die sich daraus ergebende von der Basis-Emitter-Spannung Vbe abhängige Temperatursensitivität Tcc(Vbe) des mindestens einen Bipolartransistors/Heterojunctionbipolartransistors 20 ist mittels des Koordinatensystems der Fig. 1f wiedergegeben. Dabei ist die Basis-Emitter-Spannung Vbe (in V) als Abszisse des Koordinatensystems der Fig. 1f dargestellt, während die Ordinate des Koordinatensystems der Fig. 1f die entsprechende spannungsabhängige Temperatursensitivität Tcc (in %/K) des Kollektorstroms Ic anzeigt. (Die Kollektor-Emitter-Spannung Vce liegt bei 1 V).

Vorzugsweise ist deshalb die Betreiberelektronik 18 zusätzlich dazu ausgelegt, an den mindestens einen Bipolartransistor/Heterojunctionbipolartransistor 20 der mindestens einen temperatursensitiven Sensoreinrichtung 14 unterschiedliche Spannungswerte größer Null, insbesondere unterschiedliche Spannungswerte größer Null und kleiner als die jeweilige Schwellspannung, als Basis-Emitter-Spannung Vbe anzulegen. Insbesondere kann während eines Betriebs der Sensorvorrichtung mittels des Variierens der Basis-Emitter-Spannung Vbe eine Nachregelung ausgeführt werden. Bei besonders hohen Temperatursignalen, z.B. wenn die Sensorvorrichtung direkt zu der Sonne oder einer anderen Wärmequelle ausgerichtet ist, kann die Temperatursensitivität Tcc des mindestens einen Bipolartransistors/Heterojunctionbipolartransistors 20 mittels des Variierens der Basis-Emitter-Spannung Vbe reduziert werden. Entsprechend kann die Temperatursensitivität Tcc des mindestens einen Bipolartransistors/Heterojunctionbipolartransistors 20 mittels des Variierens der Basis-Emitter-Spannung Vbe gesteigert werden.

Unter Berücksichtigung des als Basis-Emitter-Spannung Vbe angelegten Spannungswerts wird anschließend eine Auswerterelation aus einer Wertemenge mit mindestens zwei Auswerterelationen ausgewählt. Die Information wird danach unter Berücksichtigung des mindestens einen Kollektorstroms Ic und der ausgewählten Auswerterelation festgelegt. Somit kann bei der Festlegung der Information die mit dem Variieren der Basis-Emitter-Spannung Vbe geänderte Temperatursensitivität Tcc direkt oder indirekt mit berücksichtigt werden. Beispielsweise können ein an den angelegten Spannungswert der Basis-Emitter-Spannung Vbe angepasster Temperaturkoeffizient oder ein entsprechender Umrechnungsfaktor zum Umrechnen des Kollektorstroms Ic in eine Strahlungsdichte herangezogen werden.

Die vorteilhafte Variierbarkeit der Temperatursensitivität Tcc des mindestens einen Bipolartransistors/Heterojunctionbipolartransistors 20 mittels des Variierens der Basis-Emitter-Spannung Vbe macht somit eine herkömmlicher Weise oft eingesetzte Serienschaltung aus mehreren Nachweiselementen (wie z.B. Dioden) überflüssig. Die mindestens eine temperatursensitive Sensoreinrichtung 14 weist deshalb im Vergleich zu den herkömmlichen temperatursensitiven Pixeln (aus mehreren Nachweiselementen/Dioden ein enormes Miniaturisierungspotential auf. Deshalb ist der Größe/Fläche der mindestens einen temperatursensitiven Sensoreinrichtung 14 (abgesehen von einer Absorptionsfläche) quasi keine untere Grenze gesetzt.

Außerdem tritt bei der mindestens einen temperatursensitiven Sensoreinrichtung 14 nicht der Nachteil einer Serienschaltung von Dioden auf. Bei einer Serienschaltung von Dioden werden die Spannungen über den Dioden in Vorwärtsrichtung häufig für eine Verarbeitung/Auswertung zu groß. Die für das Ansteuern des mindestens einen Bipolartransistors/Heterojunctionbipolartransistors 20 benötigte Basis-Emitter-Spannung Vbe liegt hingegen in der Regel unter 1 V, so dass prinzipiell auch Low-Power ASIC-Prozesse zum Anlegen der Basis-Emitter-Spannung Vbe verwendbar sind. Diese Prozesse sind vor allem für mobile Anwendungen mit begrenztem Energiespeicher vorteilhaft.

Wie in Fig. 1a erkennbar ist, sind außerdem zwei Leitungen 38 pro temperatursensitiver Sensoreinrichtung 14 zum Kontaktieren, Ansteuern und Betreiben der mindestens einen temperatursensitiven Sensoreinrichtung 14 ausreichend. Auch zum Ermitteln des jeweiligen Kollektorstroms Ic jeder temperatursensitiven Sensoreinrichtung 14 sind die zwei die jeweilige temperatursensitive Sensoreinrichtung 14 kontaktierenden Leitungen 38 ausreichend. Die beiden direkt an der mindestens einen temperatursensitiven Sensoreinrichtung 14 mündenden Leitungen 38 können über die mindestens eine Aufhängungsstruktur 16 geführt sein.

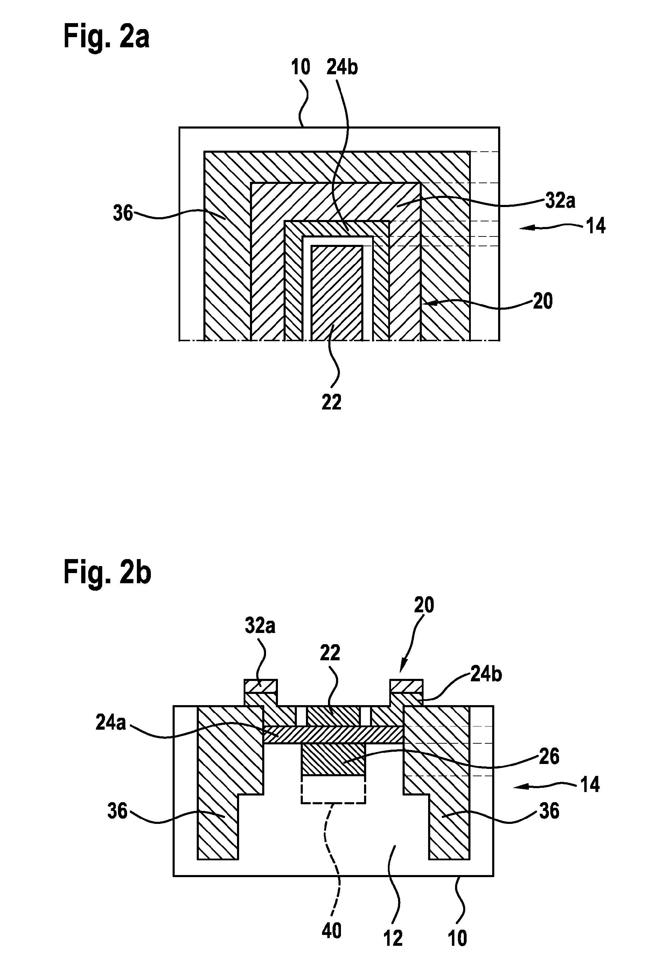

Fig. 2a und 2b zeigen eine Draufsicht und einen Querschnitt einer zweiten Ausführungsform der Sensorvorrichtung.

Die in Fig. 2a und 2b schematisch dargestellte mindestens eine temperatursensitive Sensoreinrichtung 14 der jeweiligen Sensorvorvorrichtung umfasst einen Silizium-Germanium-Bipolartransistor. Der Basisbereich 24 umfasst eine Silizium-Germaniumschicht 24a, auf deren von der mindestens einen zugeordneten Kaverne 12 weg gerichteten Fläche der als Emitter-Finger ausgebildete Emitterbereich 22 abgeschieden ist. Zusätzlich umfasst der Basisbereich 24 noch eine Polysiliziumbeschichtung 24b, welche auf der Silizium-Germaniumschicht 24a so abgeschieden ist, dass sie den Emitterbereich 22 umrahmt. Der Kollektorbereich 26 ist an einer zu der mindestens einen zugeordneten Kaverne 12 ausgerichteten Fläche der Silizium-Germaniumschicht 24a ausgebildet. Optional kann an einer zu der mindestens einen zugeordneten Kaverne 12 ausgerichteten Seite des Kollektorbereichs 26 noch eine (mit der gestrichelten Linie 40 skizzierte) strahlungsabsorbierende Schicht, z.B. eine Siliziumdioxidschicht, vorliegen.

Für die Bereiche 22 und 26 wird ein kristallines Silizium bevorzugt. Der Basiskontakt 32a kann aus Titansilizium sein. Die Ausbildung der Isolationsbereiche 36 ist lediglich optional. Die Isolationsbereiche 36 können auch weggelassen werden, da durch den Trenchprozess automatisch eine elektrische Isolation zu benachbarten Bauelementen geschaffen ist.

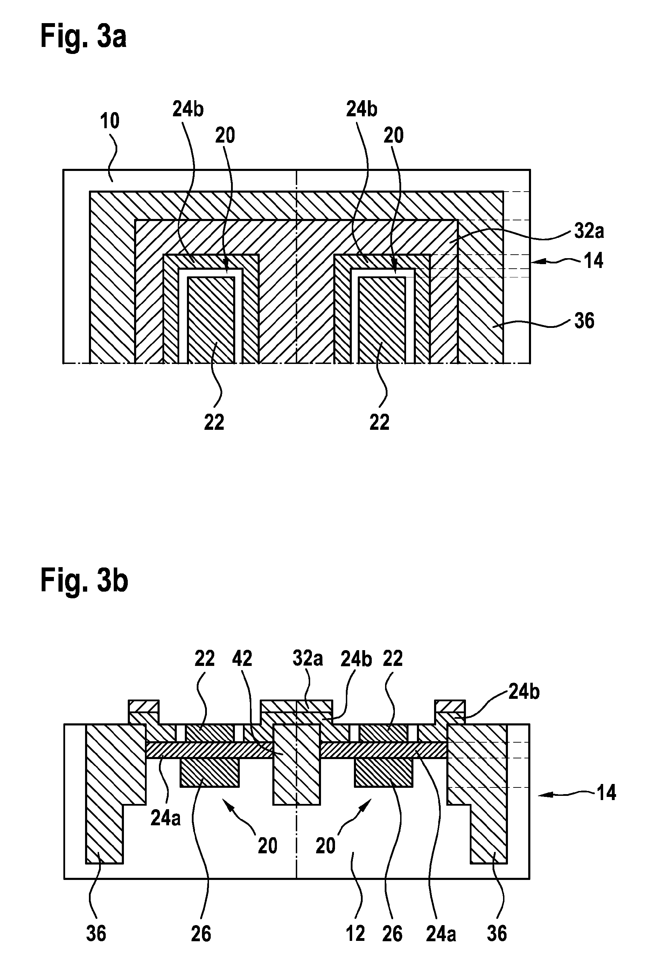

Fig. 3a und 3b zeigen eine Draufsicht und einen Querschnitt einer dritten Ausführungsform der Sensorvorrichtung.

In der Ausführungsform der Fig. 3a und 3b umfasst die gleiche temperatursensitive Sensoreinrichtung 14 mindestens zwei Bipolartransistoren/Heterojunctionbipolartransistoren 20. Mittels der gesteigerten Anzahl von Bipolartransistoren/Heterojunctionbipolartransistoren 20 pro temperatursensitiver Sensoreinrichtung 14 kann auch ein relativ niedriger Kollektorstrom Ic pro Bipolartransistor/Heterojunctionbipolartransistor 20 noch verlässlich detektiert/nachgewiesen werden. Es wird darauf hingewiesen, dass die in Fig. 3a und 3b beispielhaft dargestellte temperatursensitive Sensoreinrichtung 14 weniger Platz als eine Serienschaltung aus zwei herkömmlichen Dioden benötigt.

In der Ausführungsform der Fig. 3a und 3b weist jeder der Bipolartransistoren/Heterojunctionbipolartransistoren 20 eine eigene Silizium-Germaniumschicht 24a, einen eigenen Emitterbereich 22 und einen eigenen Kollektorbereich 26 auf. Lediglich die Polysiliziumschicht 24b, welche so auf den beiden Germaniumschichten 24a und einem dazwischen liegenden Isolierbereich 42 abgeschieden ist, dass sie eine Umrahmung für jeden der Emitterbereiche 22 bildet, wird von den Bipolartransistoren/Heterojunctionbipolartransistoren 20 geteilt. Es wird darauf hingewiesen, dass die Ausbildung des Isolierbereichs 42 optional ist. Beispielsweise können sich die Bipolartransistoren/Heterojunctionbipolartransistoren 20 auch eine gemeinsame Silizium-Germaniumschicht 24a teilen. Auch der Basiskontakt 32a wird bei der Ausführungsform der Fig. 3a und 3b geteilt.

Die Anzahl der Emitterbereiche/ Emitterfinger 22 und Kollektorbereiche 26 pro temperatursensitiver Sensoreinrichtung 14 kann weiter gesteigert werden. Der zusätzliche Platzbedarf bei einer Erweiterung einer temperatursensitivem Sensoreinrichtung 14 mit einem weiteren Emitterbereich 22 und/oder Kollektorbereich 26 entspricht hier nicht einmal dem Platzbedarf eines kompletten Bipolartransistors/Heterojunctionbipolartransistors 20. Dadurch ergeben sich Sensorvorrichtungen mit sehr kleiner thermischer Masse, die demzufolge sehr kurze Reaktionszeiten aufweisen. Dies ist vor allem für eine Anwendung im Automotive-Umfeld vorteilhaft.

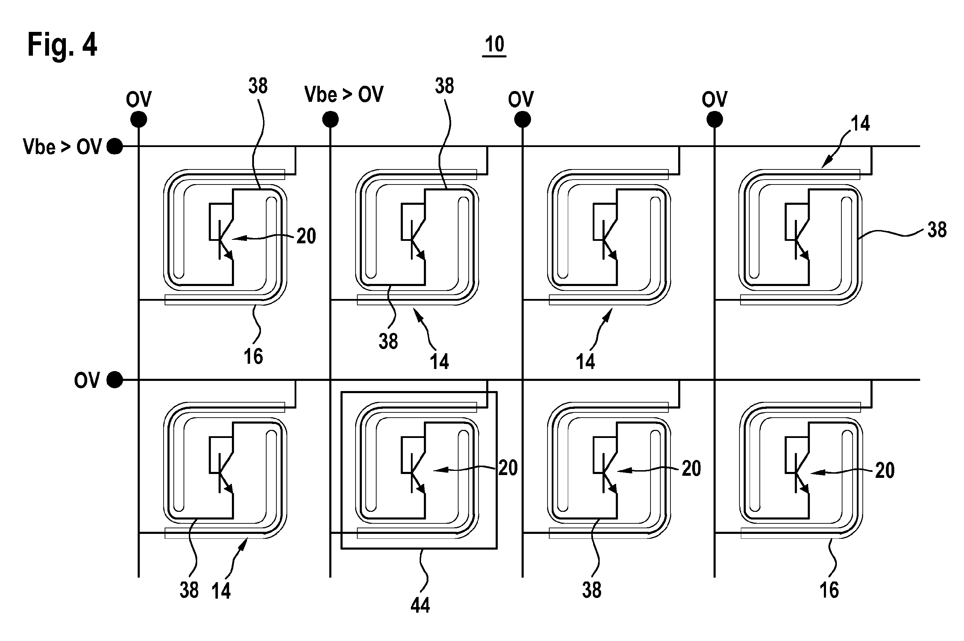

Fig. 4 zeigt eine schematische Darstellung einer vierten Ausführungsform der Sensorvorrichtung.

Die Sensorvorrichtung der Fig. 4 weist ein zweidimensionales Array von temperatursensitiven Sensoreinrichtungen 14 auf, von denen jede mindestens einen Bipolartransistor/Heterojunctionbipolartransistor 20 hat. Die temperatursensitiven Sensoreinrichtungen 14 sind vorzugsweise in Reihen und Spalten angeordnet.

Mittels der (nicht dargestellten) Betreibereinrichtung 18 wird die Basis-Emitter-Spannung Vbe bereitgestellt und der Kollektorstrom Ic als Sensorsignal gemessen. Da ein Bipolartransistor/Heterojunctionbipolartransistor 20 selbstsperrend ist, wird keine zusätzliche Schaltmatrix zum Auswählen eines der Bipolartransistoren/Heterojunctionbipolartransistoren 20 aus dem Array benötigt. Bei einem Anlegen einer negativen Spannung als Basis-Emitter-Spannung Vbe (Vbe = Vce < 0 V) ergibt sich kein Stromfluss (Kollektorstrom Ic = 0). Somit kann gezielt eine der temperatursensitiven Sensoreinrichtungen 14 (in Fig. 4 die mit dem Rahmen 44 markierte) ausgewählt und von der Betreibereinrichtung 18 ausgewertet werden.

Bei allen oben beschriebenen Sensorvorrichtungen ist der mindestens eine Bipolartransistor/Heterojunctionbipolartransistor 20 der gleichen temperatursensitiven Sensoreinrichtung 14 über ausschließlich zwei Leitungen 38 kontaktierbar. Selbst in der Ausführungsform der Fig. 3a und 3b mit mindestens zwei Bipolartransistoren/Heterojunctionbipolartransistoren 20 pro temperatursensitiver Sensoreinrichtung 14 sind diese mindestens zwei Bipolartransistoren/Heterojunctionbipolartransistoren 20 ausschließlich mittels der zwei Leitungen 38 gemeinsam kontaktierbar/ansteuerbar/auswertbar. Die Notwendigkeit von lediglich zwei Leitungen 38 pro temperatursensitiver Sensoreinrichtung 14 verbessert die thermische Entkopplung eines jeden temperatursensitiven Sensorelements 14 und steigert damit dessen Nachweisgenauigkeit.

Alle oben beschriebenen Sensorvorrichtungen können ein Temperatursensorbauteil, ein Temperatursensor, ein Strahlungssensorbauteil, ein Strahlungssensor, ein Infrarotsensorbauteil, ein Infrarotsensor und/oder eine Wärmebildkamera sein. Somit ist eine Vielzahl von Einsatzmöglichkeiten für die Sensorvorrichtungen gewährleistet.

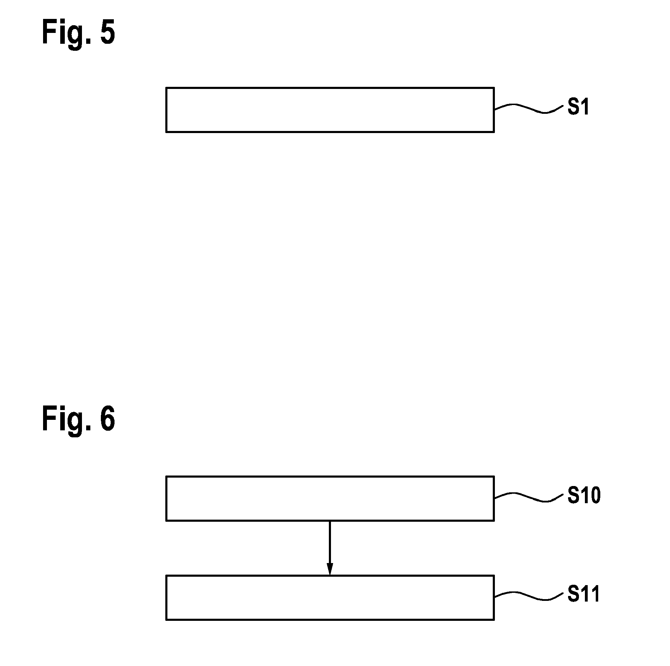

Fig. 5 zeigt ein Flussdiagramm zum Erläutern einer Ausführungsform des Herstellungsverfahrens für eine Sensorvorrichtung.

Jede der oben beschriebenen Sensorvorrichtungen ist mittels des Herstellungsverfahrens herstellbar. Die Ausführbarkeit des Herstellungsverfahrens ist jedoch nicht auf das Herstellen derartiger Sensorvorrichtungen limitiert.

In einem Verfahrensschritt S1 wird mindestens eine temperatursensitive Sensoreinrichtung ausgebildet. Die mindestens eine temperatursensitive Sensoreinrichtung wird mittels mindestens einer Aufhängungsstruktur an und/oder über mindestens einer in einem Substrat ausgebildeten Kaverne aufgehängt. Die mindestens eine temperatursensitive Sensoreinrichtung wird derart ausgebildet, dass mindestens eine elektrische Eigenschaft der jeweiligen temperatursensitiven Sensoreinrichtung bei einer Variierung einer an und/oder in der jeweiligen temperatursensitiven Sensoreinrichtung und/oder der mindestens einen zugeordneten Kaverne vorliegenden Temperatur variiert wird, wodurch mindestens ein von der jeweiligen temperatursensitiven Sensoreinrichtung an eine sensorvorrichtungseigene oder externe Betreiberelektronik bereitstellbares Stromsignal bei der Variierung der Temperatur variiert. Die mindestens eine temperatursensitive Sensoreinrichtung wird jeweils mit mindestens einem Bipolartransistor ausgebildet. Insbesondere kann mindestens eine temperatursensitive Sensoreinrichtung jeweils mit mindestens einem Heterojunctionbipolartransistor ausgestattet werden.

Zum Ausbilden des mindestens einen Bipolartransistors kann dieser z.B. in ein epitaktisch aufgewachsenes Silizium eingebracht werden. Dies kann insbesondere durch Aufwachsen einem Kollektorbereichs aus n-dotierten Epi-Silizium mit abfallender Dotierung (n$^+$-Kollektor-Kontaktdotierung bis konstanter n- Kollektordotierung), Aufwachsen des p-dotierten Basisbereichs mit einem variablen Germaniumanteil und Aufwachsen des n-dotierten Emitterbereichs erfolgen. Es wird nochmals darauf hingewiesen, dass standardgemäße Prozesse aus der Halbleitertechnologie zum Herstellen des mindestens einen Bipolartransistors/Heterojunctionbipolartransistors geeignet sind.

Die mittels des hier beschriebenen Herstellungsverfahrens hergestellten Sensorvorrichtungen haben die oben beschriebenen Vorteile.

Fig. 6 zeigt ein Flussdiagramm zum Erläutern einer Ausführungsform des Verfahrens zum Ermitteln einer Information bezüglich einer Temperatur und/oder bezüglich einer Strahlung.

In einem Verfahrensschritt S10 wird mindestens ein Stromsignal von mindestens einer temperatursensitiven Sensoreinrichtung, welche mittels mindestens einer Aufhängungsstruktur an und/oder über mindestens einer in einem Substrat ausgebildeten Kaverne aufgehängt ist und jeweils mindestens einen Bipolartransistor umfasst, abgelesen. Insbesondere kann eine Stromstärke des Stromsignals in dem Verfahrensschritt S10 ermittelt werden. (Aufgrund ihrer Ausstattung mit dem mindestens einen Bipolartransistor ist die mindestens eine temperatursensitive Sensoreinrichtung derart ausgebildet, dass mindestens eine elektrische Eigenschaft der jeweiligen temperatursensitiven Sensoreinrichtung bei einer Variierung einer an und/oder in der jeweiligen temperatursensitiven Sensoreinrichtung und/oder der mindestens einen zugeordneten Kaverne vorliegenden Temperatur variiert, wodurch das mindestens eine Stromsignal mitvariiert.) Vorzugsweise umfasst die mindestens eine temperatursensitive Sensoreinrichtung als den mindestens einen Bipolartransistor mindestens einen Heterojunctionbipolartransistor.

In einem Verfahrensschritt S11 wird anschließend unter Berücksichtigung des mindestens einen Stromsignals die Information bezüglich der Temperatur und/oder der Strahlung festgelegt. Beispielsweise können eine Temperatur, eine Temperaturverteilung, eine Strahlungsdichte und/oder eine Strahlungsdichteverteilung in dem Verfahrensschritt S12 als Information festgelegt werden. Vorzugsweise wird die Information bezüglich der Temperatur und/oder der Strahlung unter Berücksichtigung mindestens eines Kollektorstroms des mindestens einen Bipolartransistors/Heterojunctionbipolartransistors der mindestens einen temperatursensitiven Sensoreinrichtung als das mindestens eine Stromsignal festgelegt.

In einer bevorzugten Ausführungsform des Verfahrens wird in dem Verfahrensschritt S10 an den mindestens einen Bipolartransistor/Heterojunctionbipolartransistor der mindestens einen temperatursensitiven Sensoreinrichtung eine Basis-Emitter-Spannung größer Null und kleiner als eine für den mindestens einen jeweiligen Bipolartransistor vorgegebene Schwellspannung angelegt. Insbesondere können an den mindestens einen Bipolartransistor/Heterojunctionbipolartransistor der mindestens einen temperatursensitiven Sensoreinrichtung unterschiedliche Spannungswerte größer Null, vorzugsweise größer Null und kleiner als die für den mindestens einen jeweiligen Bipolartransistor vorgegebene Schwellspannung, als Basis-Emitter-Spannung angelegt werden. Damit kann das oben beschriebene Nachregeln auch während des Verfahrensschritts S10 ausgeführt werden. Gegebenenfalls können in dem Verfahrensschritt S11 unter Berücksichtigung des als Basis-Emitter-Spannung angelegten Spannungswerts eine Auswerterelation aus einer Wertemenge mit mindestens zwei Auswerterelationen ausgewählt, und die Information unter Berücksichtigung des mindestens einen Kollektorstroms und der ausgewählten Auswerterelation festgelegt werden.

Auch das oben beschriebene Verfahren realisiert die schon erläuterten Vorteile. Das Verfahren ist beispielsweise mit allen oben beschriebenen Sensorvorrichtungen durchführbar. Es wird jedoch darauf hingewiesen, dass die Ausführbarkeit des Verfahrens nicht auf das Verwenden einer derartigen Sensorvorrichtung limitiert ist.

**Patentansprüche**

1. Sensorvorrichtung mit

   einem Substrat (10) mit mindestens einer darin ausgebildeten Kaverne (12), und
   mindestens einer temperatursensitiven Sensoreinrichtung (14), welche mittels mindestens einer die mindestens eine zugeordnete Kaverne (12) zumindest teilweise überspannenden Aufhängungsstruktur (16) an und/oder über der mindestens einen zugeordneten Kaverne (12) aufgehängt ist, wobei die mindestens eine temperatursensitive Sensoreinrichtung (14) derart ausgebildet ist, dass mindestens eine elektrische Eigenschaft der jeweiligen temperatursensitiven Sensoreinrichtung (14) bei einer Variierung einer an und/oder in der jeweiligen temperatursensitiven Sensoreinrichtung (14) und/oder der mindestens einen zugeordneten Kaverne (12) vorliegenden Temperatur variiert, wodurch mindestens ein von der jeweiligen temperatursensitiven Sensoreinrichtung (14) an eine sensorvorrichtungseigene oder externe Betreiberelektronik (18) bereitstellbares Stromsignal bei der Variierung der Temperatur variiert;
   **dadurch gekennzeichnet, dass**
   die mindestens eine temperatursensitive Sensoreinrichtung (14) jeweils mindestens einen Bipolartransistor (20) umfasst.

2. Sensorvorrichtung nach Anspruch 1, wobei die Sensorvorrichtung eine Betreiberelektronik (18) umfasst, welche dazu ausgelegt ist, unter Berücksichtigung des mindestens einen von der mindestens einen temperatursensitiven Sensoreinrichtung (14) bereitgestellten Stromsignals eine Information bezüglich einer Temperatur und/oder bezüglich einer Strahlung festzulegen und auszugeben.

3.  Sensorvorrichtung nach Anspruch 2, wobei die Betreiberelektronik (18) dazu ausgelegt ist, die Information bezüglich der Temperatur und/oder bezüglich der Strahlung unter Berücksichtigung mindestens eines Kollektorstroms (Ic) des mindestens einen Bipolartransistors (20) der mindestens einen temperatursensitiven Sensoreinrichtung (14) als das mindestens eine Stromsignal festzulegen und auszugeben.

4.  Sensorvorrichtung nach Anspruch 3, wobei die Betreiberelektronik (18) zusätzlich dazu ausgelegt ist, an den mindestens einen Bipolartransistor (20) der mindestens einen temperatursensitiven Sensoreinrichtung (14) eine Basis-Emitter-Spannung (Vbe) größer Null und kleiner als eine für den mindestens einen jeweiligen Bipolartransistor (20) vorgegebene Schwellspannung anzulegen.

5.  Sensorvorrichtung nach Anspruch 3 oder 4, wobei die Betreiberelektronik (18) zusätzlich dazu ausgelegt ist, an den mindestens einen Bipolartransistor (20) der mindestens einen temperatursensitiven Sensoreinrichtung (14) unterschiedliche Spannungswerte größer Null als Basis-Emitter-Spannung (Vbe) anzulegen, und unter Berücksichtigung des als Basis-Emitter-Spannung (Vbe) angelegten Spannungswerts eine Auswerterelation aus einer Wertemenge mit mindestens zwei Auswerterelationen auszuwählen, und die Information unter Berücksichtigung des mindestens einen Kollektorstroms (Ic) und der ausgewählten Auswerterelation festzulegen.

6.  Sensorvorrichtung nach einem der vorhergehenden Ansprüche, wobei der mindestens eine Bipolartransistor (20) der mindestens einen temperatursensitiven Sensoreinrichtung (14) ein Heterojunctionbipolartransistor (20) ist.

7.  Sensorvorrichtung nach einem der vorhergehenden Ansprüche, wobei der mindestens eine Bipolartransistor (20) der mindestens einen temperatursensitiven Sensoreinrichtung (14) ein Silizium-Siliziumgermanium-Bipolartransistor ist.

8.  Sensorvorrichtung nach einem der vorhergehenden Ansprüche, wobei der mindestens eine Bipolartransistor (20) der gleichen temperatursensitiven Sensoreinrichtung (14) über ausschließlich zwei Leitungen (38) kontaktierbar ist.

9.  Sensorvorrichtung nach Anspruch 8, wobei mindestens zwei Bipolartransistoren (20) der gleichen Sensoreinrichtung (14) über die ausschließlich zwei Leitungen (38) gemeinsam kontaktierbar sind.

10. Sensorvorrichtung nach einem der vorhergehenden Ansprüche, wobei die Sensorvorrichtung ein Temperatursensorbauteil, ein Temperatursensor, ein Strahlungssensorbauteil, ein Strahlungssensor, ein Infrarotsensorbauteil, ein Infrarotsensor und/oder eine Wärmebildkamera ist.

11. Herstellungsverfahren für eine Sensorvorrichtung mit dem Schritt:

    Ausbilden mindestens einer temperatursensitiven Sensoreinrichtung (14), welche mittels mindestens einer Aufhängungsstruktur (16) an und/oder über mindestens einer in einem Substrat (10) ausgebildeten Kaverne (12) aufgehängt wird, wobei die mindestens eine temperatursensitive Sensoreinrichtung (14) derart ausgebildet wird, dass mindestens eine elektrische Eigenschaft der jeweiligen temperatursensitiven Sensoreinrichtung (14) bei einer Variierung einer an und/oder in der jeweiligen temperatursensitiven Sensoreinrichtung (14) und/oder der mindestens einen zugeordneten Kaverne (12) vorliegenden Temperatur variiert, wodurch mindestens ein von der jeweiligen temperatursensitiven Sensoreinrichtung (14) an eine sensorvorrichtungseigene oder externe Betreiberelektronik (18) bereitstellbares Stromsignal bei der Variierung der Temperatur variiert;
    **dadurch gekennzeichnet, dass**
    die mindestens eine temperatursensitive Sensoreinrichtung (14) jeweils mit mindestens einem Bipolartransistor (20) ausgebildet wird (S1).

12. Verfahren zum Ermitteln einer Information bezüglich einer Temperatur und/oder bezüglich einer Strahlung mit den Schritten:

    Ablesen mindestens eines Stromsignals von mindestens einer temperatursensitiven Sensoreinrichtung (14), welche mittels mindestens einer Aufhängungsstruktur (16) an und/oder über mindestens einer in einem Substrat (10) ausgebildeten Kaverne (12) aufgehängt ist und jeweils mindestens einen Bipolartransistor (20) umfasst (S10); und
    Festlegen der Information bezüglich der Temperatur und/oder der Strahlung unter Berücksichtigung des mindestens einen Stromsignals (S11).

**13.** Verfahren nach Anspruch 12, wobei die Information bezüglich der Temperatur und/oder bezüglich der Strahlung unter Berücksichtigung mindestens eines Kollektorstroms (Ic) des mindestens einen Bipolartransistors (20) der mindestens einen temperatursensitiven Sensoreinrichtung (14) als das mindestens eine Stromsignal festgelegt wird.

**14.** Verfahren nach Anspruch 13, wobei an den mindestens einen Bipolartransistor (20) der mindestens einen temperatursensitiven Sensoreinrichtung (14) eine Basis-Emitter-Spannung (Vbe) größer Null und kleiner als eine für den mindestens einen jeweiligen Bipolartransistor (20) vorgegebene Schwellspannung angelegt wird.

**15.** Verfahren nach Anspruch 13 oder 14, wobei an den mindestens einen Bipolartransistor (20) der mindestens einen temperatursensitiven Sensoreinrichtung (14) unterschiedliche Spannungswerte größer Null als Basis-Emitter-Spannung (Vbe) angelegt werden, und wobei unter Berücksichtigung des als Basis-Emitter-Spannung (Vbe) angelegten Spannungswerts eine Auswerterelation aus einer Wertemenge mit mindestens zwei Auswerterelationen ausgewählt wird, und die Information unter Berücksichtigung des mindestens einen Kollektorstroms (Ic) und der ausgewählten Auswerterelation festgelegt wird.

**Fig. 1a**

**Fig. 1b**

## Fig. 1c

## Fig. 1d

## Fig. 1e

## Fig. 1f

**Fig. 2a**

10   24b

36

32a

14

20

22

**Fig. 2b**

32a

20

22

24b

24a

26

14

36

36

40   12   10

**Fig. 3a**

**Fig. 3b**

Fig. 4

EP 2 902 759 A1

**Fig. 5**

~ S1

**Fig. 6**

~ S10

~ S11

EP 2 902 759 A1

## EUROPÄISCHER RECHERCHENBERICHT

Nummer der Anmeldung

EP 14 19 5330

Europäisches Patentamt
European Patent Office
Office européen des brevets

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/321641 A1 (PARK KUN SIK [KR] ET AL) 31. Dezember 2009 (2009-12-31) | 1-7, 10-15 | INV. G01J5/04 G01J5/20 |
| Y | * Absätze [0003], [0019], [0020], [0044] - [0048], [0081] - [0084] * * Abbildungen 2,8A,8B * | 6-8 | |
| X | JP 2007 225398 A (MITSUBISHI ELECTRIC CORP) 6. September 2007 (2007-09-06) * Absätze [0036] - [0040] * * Abbildung 3 * | 1,2,4, 8-10 | |
| X | EP 2 573 530 A2 (FRAUNHOFER GES FORSCHUNG [DE]) 27. März 2013 (2013-03-27) * Absätze [0034] - [0036] * * Abbildung 4 * | 1,2,4,10 | |
| Y | CRESSLER J: "Re-engineering silicon: Si-Ge heterojunction bipolar technology", IEEE SPECTRUM, IEEE INC. NEW YORK, US, Bd. 32, Nr. 3, 1. Mai 1995 (1995-05-01), Seiten 49-55, XP007923146, ISSN: 0018-9235, DOI: 10.1109/6.367973 [gefunden am 2002-08-06] * Seite 49, linke Spalte, Absatz 2 * * Seite 55, linke Spalte, Absatz 4 * | 6,7 | RECHERCHIERTE SACHGEBIETE (IPC) G01J |
| Y | US 2012/091342 A1 (BERGER ISRAEL [IL] ET AL) 19. April 2012 (2012-04-19) * Absatz [0049] * * Abbildung 8 * | 8 | |

Der vorliegende Recherchenbericht wurde für alle Patentansprüche erstellt

| Recherchenort | Abschlußdatum der Recherche | Prüfer |
|---|---|---|
| München | 18. Juni 2015 | Jacquin, Jérôme |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 19 5330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2015

| Im Recherchenbericht angeführtes Patentdokument | Datum der Veröffentlichung | Mitglied(er) der Patentfamilie | Datum der Veröffentlichung |
|---|---|---|---|
| US 2009321641 A1 | 31-12-2009 | JP 2009109473 A<br>KR 20090044181 A<br>US 2009321641 A1 | 21-05-2009<br>07-05-2009<br>31-12-2009 |
| JP 2007225398 A | 06-09-2007 | KEINE | |
| EP 2573530 A2 | 27-03-2013 | DE 102011081641 A1<br>EP 2573530 A2<br>US 2013056733 A1 | 28-02-2013<br>27-03-2013<br>07-03-2013 |
| US 2012091342 A1 | 19-04-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006028435 A1